Europäisches Patentamt

(19) European Patent Office

Office européen des brevets

(11) Publication number: **0 139 395**
**A2**

(12) # EUROPEAN PATENT APPLICATION

(21) Application number: 84305701.9

(51) Int. Cl.⁴: **F 24 H 1/18**

(22) Date of filing: 22.08.84

(30) Priority: 24.08.83 GB 8322693

(43) Date of publication of application:
02.05.85 Bulletin 85/18

(84) Designated Contracting States:
BE DE GB IT NL

(71) Applicant: **JACKSON CATERING EQUIPMENT LIMITED**
**P.O.Box 153**
**Leeds,LS1 1QR(GB)**

(72) Inventor: **Duncan, Michael E.**
**Hestia Fieldhead Lane**
**Birstall West Yorkshire(GB)**

(74) Representative: **Skerrett, John Norton Haigh et al,**
**H.N. & W.S. SKERRETT Rutland House 148 Edmund**
**Street**
**Birmingham B3 2LQ(GB)**

(54) Improvements relating to water-heating boilers.

(57) A self-feeding water-heating boiler for dispensing hot water for beverage making purposes includes a main boiling chamber (62) which communicates through a steam pipe (90) with an overhead steam condenser (64). Incoming fresh feed water is delivered to the condenser (64) from which is passes through an outlet (108) to a feed tank (65) for feeding to the boiling chamber (62) but the condenser (64) is so constructed as to trap a quantity of the feed water below the level of the outlet (108) to provide a permanent pool (100) of coolant. In one embodiment, a baffle (96) traps steam entering the condenser and ensures that it can only escape by bubbling through the coolant water pool (100).

EP 0 139 395 A2

Croydon Printing Company Ltd.

FIG.4.

## IMPROVEMENTS RELATING TO WATER-HEATING BOILERS

The present invention relates to water-heating apparatus and, more, particularly, to so-called "self-feeding" water-heating boilers having an automatic water supply feed system which are designed to produce boiling or near-boiling water for delivery or dispensing on demand. Such water-heating boilers are, for example, commonly used in the catering industry to provide boiling water for making tea and other beverages.

One form of water-heating boiler of the above-mentioned kind to which the invention is applicable has a steam responsive thermostat which controls the filling and refilling of the boiler by operating cyclically to ensure that fresh incoming water is introduced intermittently and only in small quantities which are insufficient to cause any undue reduction in temperature of the water already contained in the boiler so that the latter is maintained at or close to boiling point ready for instant draw-off and immediate use.

The invention is also applicable to water-heating boilers of the above-mentioned kind which are of the so-called "expansion type" wherein the water is maintained at a high stand-by temperature and is drawn off from a cup-like receptacle into which it expands and spills over from a main boiling chamber where it is rapidly brought up to the boil by a heater switched on during draw-off.

It will be appreciated that in use such boilers may generate considerable quantities of steam and may be maintained for long periods at a high temperature although possibly only operated intermittently for dispensing relatively small quantities of boiling water. Temperature gradients established in a state of near thermal equilibrium may therefore be minimal.

It is an object of the present invention to provide improvements for increasing the efficiency of such boilers.

2

0139395

According to the invention, a water-heating boiler designed for producing boiling or near-boiling water for delivery or dispensing on demand, said boiler being of the self-feeding type having a water supply feed system arranged automatically to fill and replenish a boiling chamber thereof with fresh feed water as needed from an external supply, and including an overhead steam condenser to which at least some of the incoming fresh feed water is delivered in use by supply means included in the water supply feed system, is characterised in that said steam condenser is so constructed as to trap when in use a quantity of said incoming fresh feed water to provide a permanent pool or reservoir of heat exchange water coolant therein.

In preferred embodiments an intermediate feed tank or cistern is provided from which the fresh feed water is delivered directly to the boiling chamber of the boiler for filling and refilling the latter, and the steam condenser includes a water drainage outlet positioned at a level above the bottom thereof through which the incoming fresh water is fed to said feed tank or cistern. The level of such outlet determines the level of the trapped water pool or reservoir.

The intermediate feed tank or cistern also conveniently contains water level sensing means which operates in use to shut off the incoming water supply when the water therein reaches a level corresponding to a predetermined normal maximum level of water in the boiling chamber of the boiler under conditions of hydrostatic equilibrium.

The steam condenser preferably comprises a separate hollow vessel or structure mounted above the main boiling chamber of the boiler and provides a steam collecting and condensing space connected with said boiling chamber by way of a steam inlet pipe forming a communicating passageway of which the upper end terminates at a level above the bottom or base of the condenser vessel and above the level of the water drainage outlet.

According to a further preferred feature especially suitable for

"expansion type" boilers where a greater quantity of steam may be generated, the steam condenser is constructed so that in use the steam entering therein is delivered into a closed space above the trapped water pool or reservoir in the bottom thereof and can only reach the water outlet by bubbling through such pool or reservoir. This may conveniently be arranged by providing a suitable baffle structure in the condenser vessel. The incoming fresh water is preferably passed through a constricted feed pipe so it is delivered with increased velocity and is sprayed into the interior of the condenser vessel; it may further be specifically directed or sprayed against a significant area of the inner surface of the condenser vessel bounding the steam collecting and condensing space to increase its cooling effect.

Other advantageous and beneficial features will be apparent from the following more detailed description, presented by way of example, of preferred embodiments of water boilers in accordance with the invention which are illustrated in the accompanying drawings.

In said drawings,

FIGURE 1 is a side elevational view, partly broken away and partly in section, of the water boiler of a first embodiment;

FIGURE 2 is a vertical sectional view taken on line II – II of FIGURE 1, with parts being omitted for clarity;

FIGURE 3 is a fragmentary vertical sectional view taken on line III – III of FIGURE 1;

FIGURE 4 is a side elevational view, partly broken away and partly in section, of an "expansion type" water boiler representing a second embodiment of the invention;

FIGURE 5 is a front elevational view, partly broken away and partly in section, of the boiler of FIGURE 4; and

FIGURE 6 is a top plan view of a steam condenser structure of the boiler of the second embodiment.

The water-heating boilers illustrated in the drawings are designed for use primarily in the catering industry to provide boiling or near-boiling water for purposes such as making tea and other hot beverages, the water contents of the boiler being stored and maintained at a temperature close to boiling point so as to be available for drawing off immediately on demand, and both are of the self-feeding type having an automatic water supply feed system.

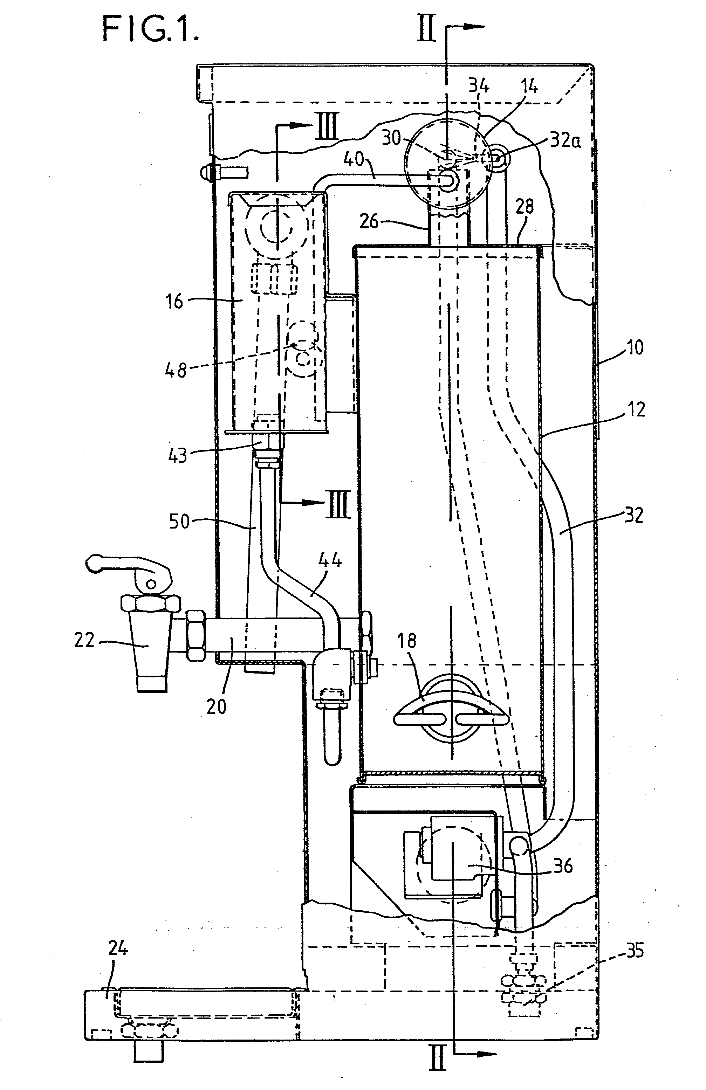

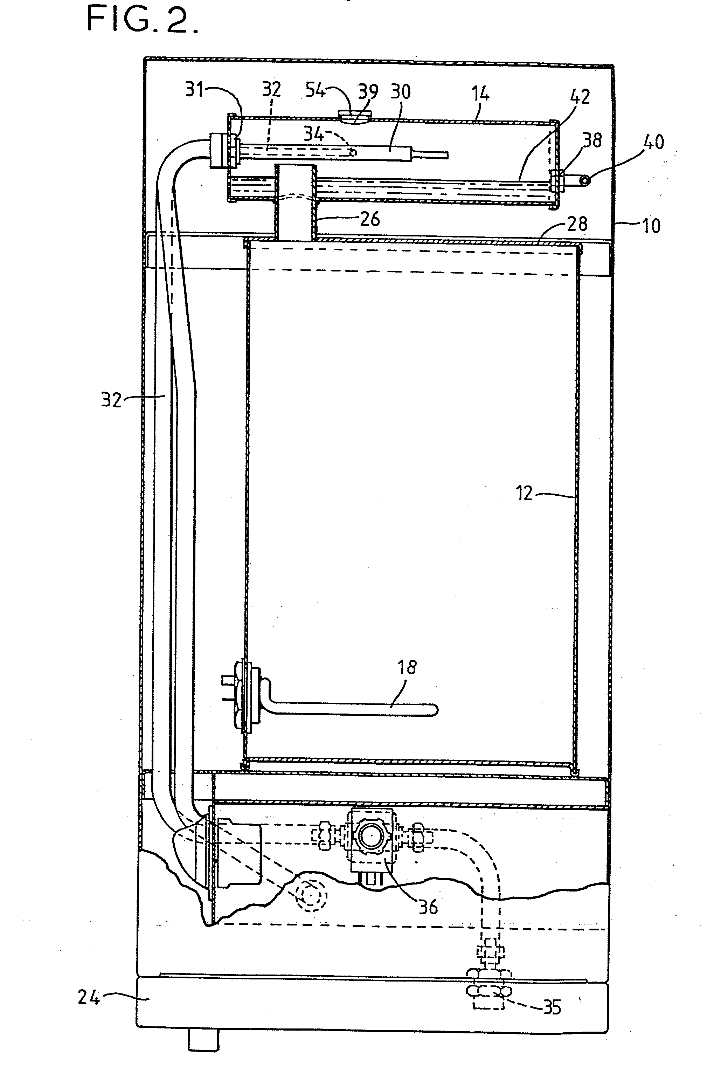

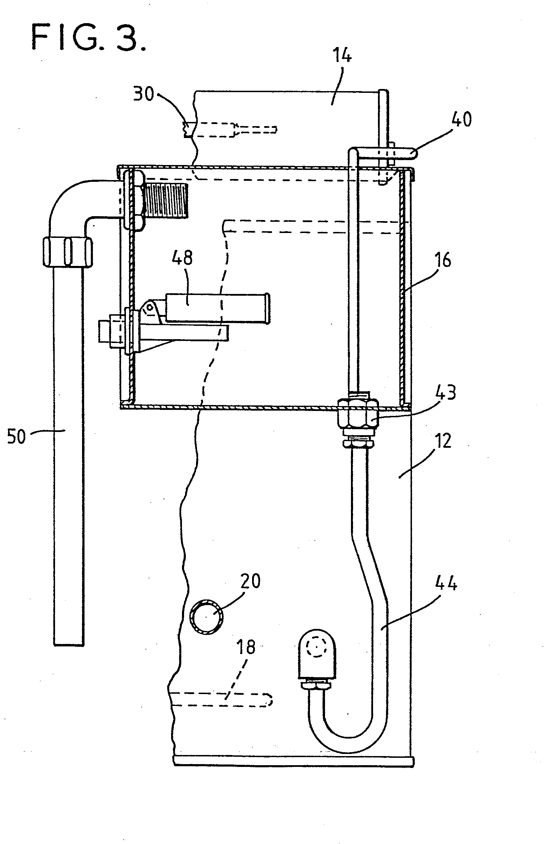

Referring first to FIGURES 1 to 3 of the drawings, the boiler of the first embodiment illustrated therein comprises an outer casing 10, suitable for bench or counter-top mounting or wall mounting, housing a main boiling chamber 12, an overhead steam condenser vessel 14, and a cistern type fresh water feed tank 16 and other associated components.

The boiling chamber 12 is provided by a tinned copper tank of generally rectangular form fitted towards the bottom with an inwardly-extending horizontally disposed electric immersion heater element 18 which incorporates a thermal cut-out switch and provides the heating source. At a slightly higher level, an outlet tube 20 leads to a draw-off tap 22 at the front which is at a suitable height above a forwardly-projecting base 24 as to permit easy access for filling teapots or other receptacles when the unit is in position on a counter-top.

At the top of the boiling chamber 12 an interconnecting pipe 26 providing a communicating passageway for admitting steam leads upwardly into the condenser vessel 14 which is a closed-ended cylindrical vessel, also conveniently made of tinned copper, mounted horizontally above the boiling chamber so that the hollow interior provides a steam collecting and condensing space.

The steam inlet pipe 26 may be fixed in its upper part to the bottom or base wall of the condenser vessel 14 and may serve to support the latter in position, the lower end being fixed to a top cover 28 of the boiling chamber. This top cover 28 is advantageously detachably fitted in place so that it can be removed (as a unit together with the condenser vessel after disconnecting other parts attached thereto) to provide access to the boiling chamber interior for servicing and descaling.

Within the condenser vessel 14 is a steam responsive thermostat sensing element 30, in the form of a slender elongate bulb, which is carried by a mounting grommet 31 in one end wall so as to extend axially in spaced relationship with the walls of the vessel. At the back, a reduced diameter end section 32a of a water inlet feed pipe 32 is sealed into and passes through the rear wall of the condenser vessel to terminate within the hollow interior in a short nozzle or jet 34 having an orifice aimed towards the sensing element 30. In use, the water inlet feed pipe 32 connects to an external fresh water supply system through a main water inlet connector 35 and a normally-closed solenoid operated water inlet control valve 36 located in the lower part of the casing, and incoming water is sprayed under pressure into the condenser vessel interior. By virtue of the relative positioning of the nozzle or jet 34 and the sensing element 30, which is preferably accurately set up by the manufacturer and checked by observation through a normally covered aperture 54 in the top of the condenser, a substantial proportion of the incoming water sprays directly on to the sensing element 30 and most of the remainder sprays against a significant area of the inner surface of the condenser vessel walls thereby promoting more effective cooling action.

As shown in the drawing, the upper end of the steam inlet pipe 26 terminates at a level some distance above the base of the condenser vessel. and slightly below this level a water outlet 38 in the far end wall of the condenser vessel leads through an outlet pipe 40 to the feed tank or cistern 16. By virtue of this arrangement, after water has entered into the condenser vessel during use, a certain quantity is trapped to provide a permanent pool or reservoir in the bottom (as indicated at 42) from which it spills over through the outlet 38 without entering the steam pipe 26 and draining down directly into the boiling chamber.

Feed tank 16 forms part of an intermediate feeder arrangement for transfering fresh incoming water from the condenser vessel 14 to the boiling chamber 12 for filling and replenishing the latter, a water outlet 43 in the bottom of this tank being connected to the boiling chamber by way of a delivery pipe 44 having a U-shaped loop (to prevent hot water convection currents) arranged to introduce the fresh water into the boiling chamber at a level slightly above but close to the immersion heater element 18 and below the draw-off tube 20, as shown.

The feed tank 16 also contains a level sensor 48, conveniently a pivoted float-operated reed switch device, which sets the maximum level of water therein, and in the boiling chamber with which the feed tank 16 is in hydrostatic equilibrium, by being operatively connected in the electrical energising circuit of the solenoid water supply inlet valve 36. The feed tank 16 is also provided with a conventional overflow pipe 50.

As indicated, the solenoid valve 36 and the other main electrical controls are compactly housed in the lower cooler part of the casing 10 below the boiling chamber 12.

In operation, assuming the boiling chamber is initially empty, upon switching on the electrical power supply the heater element 18 rapidly heats up until its thermal cut-out trips and this has the effect of causing the solenoid valve 36 to be energised and to open. In consequence, water from the mains supply is then delivered via the condenser vessel 14 and intermediate feeder tank 16 to the boiling chamber 12 until the level therein reaches the heating element 18. The cooling effect of this water on the heating element then results in the thermal cut-out re-closing, the water inlet valve solenoid is de-energised and the inlet valve itself re-closes to shut off the water supply. With full heating power restored the water in the boiling chamber is rapidly brought up to the boil, thereby producing steam which passes up through the steam pipe 26 and collects in the condenser vessel. The steam sensing thermostat then responds to cause solenoid valve 36 to re-open and hence further water is introduced into the boiling chamber. The cycle is then repeated and the net effect is that the level of water in the boiling chamber rises in stages while the temperature is kept close to boiling point ready for draw-off and immediate use until eventually the boiling chamber is filled to its maximum rated capacity. At this point the level sensor 48 operates to keep the solenoid inlet valve 36 closed, thereby preventing further inflow of water unless some is first drawn off through tap 22, and the steam responsive thermostat simply cycles to switch the heater element on and off to maintain the temperature while the steam is efficiently condensed in the condenser vessel.

With the particular arrangement described, as a result especially of the efficient functioning of the steam condenser and feed system, and of the fresh water cooling of the steam thermostat element, an effective and close control of the incoming water is achieved leading to a short cycling period of the control system and introduction of water in small quantities, with but a small temperature variation in consequence, when the boiling chamber is filling or re-filling. And generally, there is an improved efficiency and performance, even if operating for long periods under economically unfavourable stand-by conditions with only small quantities of water being dispensed intermittently.

It will, however, be understood that various modifications in the precise constructional and operational details of the particular boiler hereinbefore described may be made within the scope of the present invention.

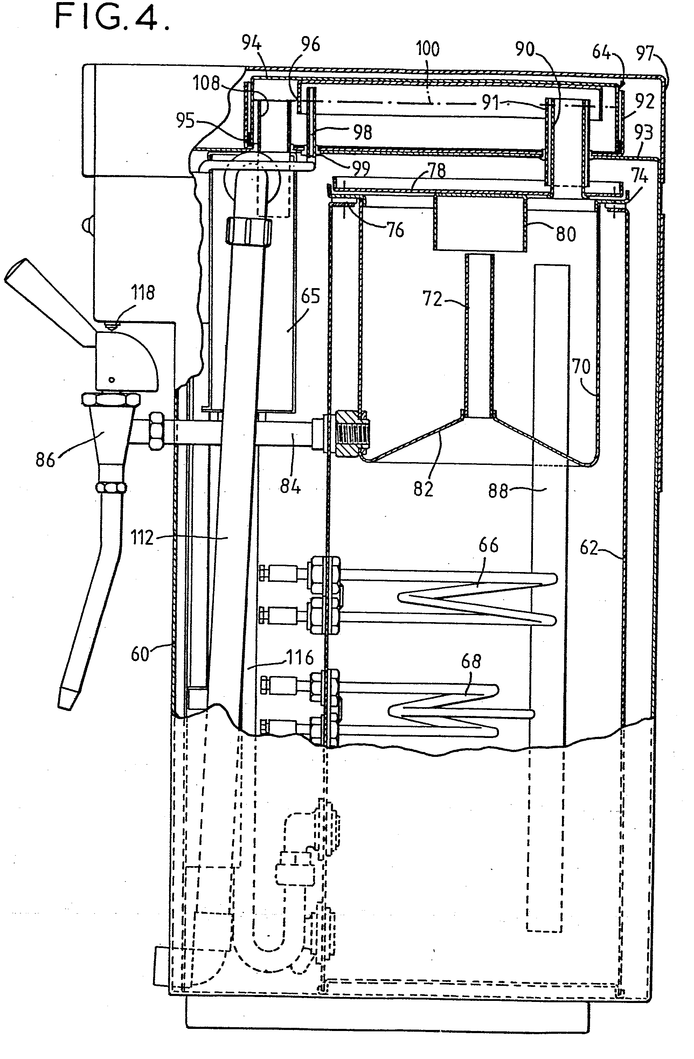

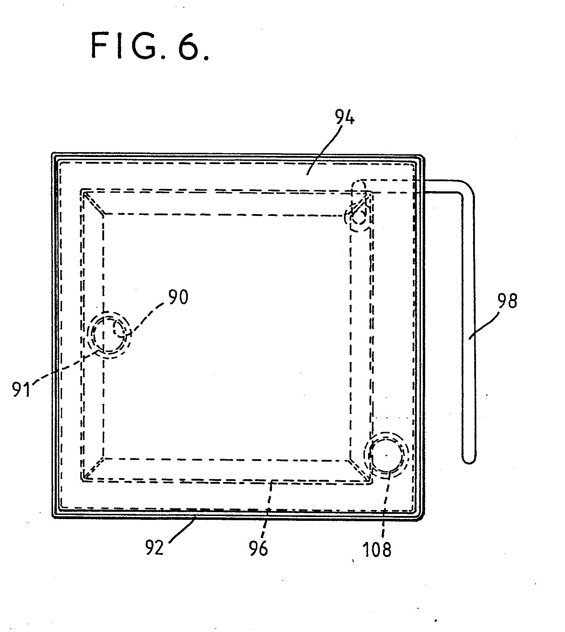

The boiler in the second embodiment illustrated in FIGURES 4 to 6 of the drawings is again a self-feeding boiler for providing boiling or near-boiling water for making tea and other hot beverages, but in this case it is of the so-called "expansion" type.

It comprises an outer casing 60 with a top cover part 97, and housed therein is a main boiling chamber 62, an overhead steam condenser vessel 64, an intermediate fresh water feed tank 65, and other associated components.

The main boiling chamber 62 is provided by a tank containing immersion type electric heating elements, namely a main heating element 66 and a pilot heating element 68.

Fitted within the top of the main boiling chamber 62, above the heating elements 66 and 68, is the usual cup-like boiling water receptacle 70 into which the water from the boiling chamber spills over from a central expansion tube 72 as a result of expansion in volume during heating. The receptacle 70 has an outwardly turned flange 74 around its rim which is secured to a seating provided by an inturned flange 76 around the top of the boiling chamber vessel, and the receptacle 70 is closed by a bolted-on cover or lid 78 carrying on its underside a cowl 80 which lies immediately above the expansion tube 72 to control splashing and scattering of boiling water from the latter. A small vent hole or holes (not shown) may be provided on the side wall of the receptacle 70 communicating with the interior of the boiling chamber, adjacent the top, for preventing any unequal pressure build-up.

At the bottom of the receptacle 70 the base wall 82 is conically re-entrant and an outlet tube 84 leads to a draw-off dispensing tap 86 at the front. When operated the tap 86 switches on the main heating element 66 via a micro-switch 118. Inside the receptacle 70, a tube 88 also extends vertically downwards from just below the level of the top of the expansion tube 72 into the lowermost region of the boiling chamber to provide for recirculation of heated water when it is not being drawn off by the tap 86.

The steam condenser vessel 64, lying within the top cover part 97, is made up of a lower tray unit 92 of rectangular form and an upper tray unit 94 of similar shape which is inverted and fitted within the lower tray unit with sealing compound 95 between so as to form a hollow box-like structure.

Towards one side the lower tray unit 92 is provided with a short tube 91 extending vertically through the base to which it is conveniently fixed by a soldered bush, and this tube 91 forms a sleeve that receives in sealing relationship an inner tube 90 upstanding from, and carried by, the cover or lid 78 of the receptacle 70 affording a passageway for steam to pass through and enter the condenser vessel 64. It will be noted that the top of this steam inlet tube assembly, 90, 91, lies inside a hood-like baffle 96 forming interior structure of the upper tray unit.

The self-feeding fresh water supply system of the boiler includes a main water inlet feed pipe 102 leading from a water inlet connector 106 which connects to an external mains water supply. The inlet feed pipe 102 contains a solenoid-operated water inlet control valve 104 and delivers incoming fresh water to the condenser vessel 64 via a reduced diameter inlet pipe delivery section 98 which also passes through the base of the lower tray unit 92 and terminates inside the hood-like baffle structure 96. From the condenser vessel 64 the incoming water passes to the intermediate fresh water feed tank 65 by way of a water outlet tube 108 which is again sealed into the base of the lower tray unit 92, as by a soldered bush for example.

The intermediate feed tank 65 contains level sensors 110a, 110b and 110c (conveniently float-operated reed switch devices), and has an outlet 114 in the bottom which is connected to the lower part of the main boiling chamber 64 by way of a delivery feed pipe 116 so that the level of water in the boiling chamber is in hydrostatic equilibrium with that in the feed tank 65. The datum level for the water in the boiling chamber when cold is set so that it is below the top of the expansion tube 72, and when this level is exceeded in the feed tank 65 the level sensor 110b therein normally operates to maintain the solenoid valve 104 closed to shut-off the water supply. The lower sensor 110a is provided for detecting a condition of the tank 65 being empty, as for instance in the event of a failure of the water supply, thereby to cut off the heater supply, while the upper sensor 110c is provided for detecting a high limiting level of water which may occur as a result of expansion in approaching a state of thermal equilibrium. If this upper level is reached, sensor 110c will operate again to cut off the heater supply and prevent further expansion and rise in level.

The feed tank 65 is also provided with a conventional overflow pipe 112.

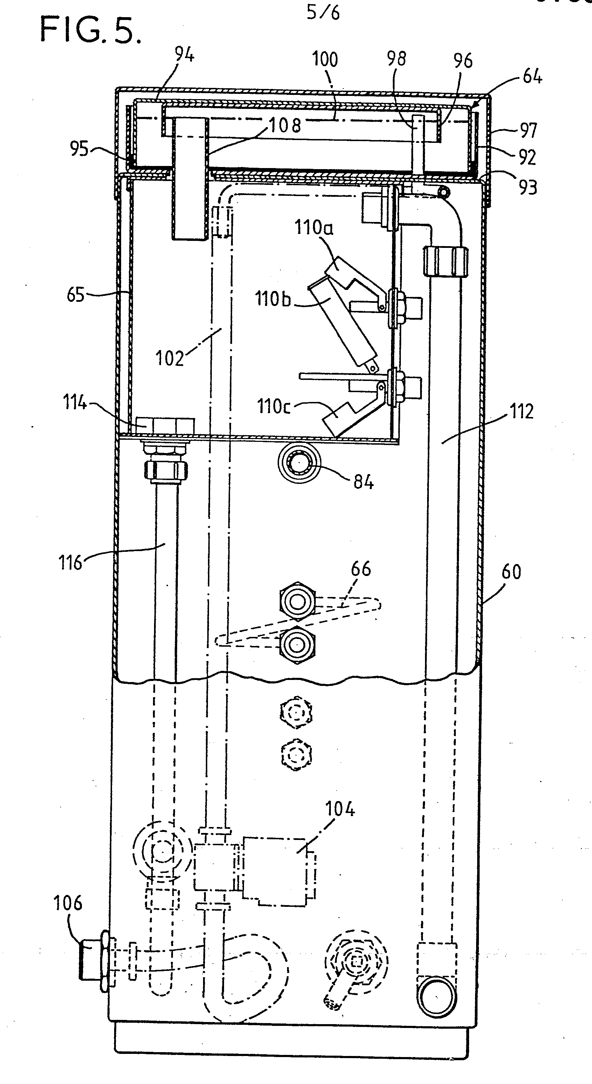

As will be seen from the drawings, the upper end of the water outlet tube 108, although below the level of the top of the steam inlet tube assembly 90, 91, is located above the bottom of the lower tray unit 92 and, in consequence, a quantity of the incoming water entering the condenser vessel through the inlet pipe delivery section 98 is trapped to form a permanent pool or reservoir which overflows into the outlet tube 108. The upper end of this outlet tube 108 thus determines the level of this pool or reservoir which is indicated at 100 in FIGURES 4 and 5.

It will also be seen that this level of water 100 is above the lower edge of the skirt-like sides of the baffle hood 96 whilst the outlet tube 108 is located outside the baffle hood. Therefore, steam entering into the condenser vessel cannot pass directly to the outlet tube 108 and feed tank 65 without bubbling through the water pool or reservoir which promotes rapid condensation.

By providing the boiler with this arrangement of steam condenser, the operating efficiency is significantly improved. In this respect it has been found that the direct supply of water from the fresh water inlet feed system to the condenser vessel and the provision of a permanent pool or reservoir of water therein are particularly important features, especially when the boiler is only being used intermittently for dispensing small quantities of boiling water. In these latter circumstances the condenser may well reach substantially a state of thermal equilibrium with the main boiling chamber which is kept at a high temperature not far below boiling point by the pilot heater 68 and the condensing efficiency of the condenser would therefore otherwise then be low were it not for the increased thermal absorption capacity provided by the coolant water therein. The arrangement also obviates any need for a separate steam vent.

## CLAIMS

1. A water-heating boiler designed for producing boiling or near-boiling water for delivery or dispensing on demand, said boiler being of the self-feeding type having a water supply feed system arranged automatically to fill and replenish a boiling chamber (12;62) thereof with fresh feed water as needed from an external supply, and including an overhead steam condenser (14;64) to which at least some of the incoming fresh feed water is delivered in use by supply means (32;98) included in the water supply feed system, characterised in that said steam condenser (14;64) is so constructed as to trap when in use a quantity of said incoming fresh feed water to provide a permanent pool or reservoir of heat exchange water coolant (42;100) therein.

2. A water-heating boiler as claimed in Claim 1, wherein the water supply feed system includes an intermediate feed tank or cistern (16;65) from which the fresh feed water is delivered directly to the boiling chamber (12;62) of the boiler for filling and refilling thereof, and the steam condenser (14;64) includes a water drainage outlet (38;108) positioned at a level above the bottom thereof through which the incoming fresh water is fed to said feed tank or cistern.

3. A water-heating boiler as claimed in Claim 2, wherein the feed tank or cistern (16;65) is provided with water level sensing means (48;110a,110b,110c) which operates in use to shut off the incoming water supply when the water therein reaches a level corresponding to a predetermined normal maximum level of water in the boiling chamber (12;62) of the boiler under conditions of hydrostatic equilibrium.

4. A water-heating boiler as claimed in Claim 2 or 3, wherein the steam condenser (14;64) comprises a separate hollow vessel or structure mounted above the main boiling chamber (12;62) of the boiler and provides a steam collecting and condensing space connected with said boiling chamber by way of a steam inlet pipe (26;90) forming a communicating passageway.

5. A water-heating boiler as claimed in Claim 4 wherein the upper end of the steam inlet pipe (26;90) terminates at a level above the bottom or base of the condenser vessel (14;64) and above the level of the water drainage outlet (38;108).

6. A water-heating boiler as claimed in any of Claims 2 to 5, wherein the steam condenser (64) is constructed so that in use the steam entering therein is delivered into a closed space above the trapped water pool or reservoir (100) in the bottom thereof and can only reach the water outlet (108) by bubbling through such pool or reservoir (100).

7. A water-heating boiler as claimed in Claim 6, wherein the steam condenser (64) includes a baffle structure (96) which defines said closed space above the trapped water pool or reservoir (100) and controls the route of steam passing to the water outlet (108) through said pool or reservoir (100).

8. A water-heating boiler as claimed in any of the preceding claims wherein the water supply feed system supply means (32;102) includes a constriction (32a;98) adapted to deliver the incoming fresh water with increased velocity and to spray it into the interior of the steam condenser (14;64).

9. A water-heating boiler as claimed in any of the preceeding claims wherein the steam condenser (14;64) is a separate removable structural unit.

FIG.1.

0139395

1/6

# FIG.2.

# FIG. 3.

# FIG.4.

# FIG.5.

0139395

# FIG. 6.